(19) Europäisches Patentamt
European Patent Office
Office européen des brevets

(11) EP 4 759 696 A1

# (12) EUROPEAN PATENT APPLICATION
published in accordance with Art. 153(4) EPC

(43) Date of publication:
**17.06.2026 Bulletin 2026/25**

(21) Application number: **24851885.4**

(22) Date of filing: **07.08.2024**

(51) International Patent Classification (IPC):
***B62M 6/45*** *(2010.01)* ***B62J 45/00*** *(2020.01)*
***B62J 45/411*** *(2020.01)* ***B62J 45/412*** *(2020.01)*
***B62M 25/08*** *(2006.01)*

(52) Cooperative Patent Classification (CPC):
**B62J 45/00; B62J 45/411; B62J 45/412; B62M 6/45; B62M 25/08**

(86) International application number:
**PCT/JP2024/028255**

(87) International publication number:
**WO 2025/033464 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 JP 2023130758**
**10.08.2023 JP 2023130756**

(71) Applicant: **Jatco Ltd.**
**Shizuoka 417-8585 (JP)**

(72) Inventors:
- **SUZUKI, Katsunobu**
  **Fuji-shi, Shizuoka 417-8585 (JP)**
- **YAMAUCHI, Yasuhiro**
  **Fuji-shi, Shizuoka 417-0002 (JP)**

(74) Representative: **Hoefer & Partner Patentanwälte mbB**
**Pilgersheimer Straße 20**
**81543 München (DE)**

## (54) VEHICLE, INPUT DEVICE, VEHICLE CONTROL METHOD, CONTROL METHOD FOR INPUT DEVICE, AND PROGRAM

(57) [PROBLEM] To control the motor so as to conform to the target exercise intensity of the driver without the driver having to wear a heart rate detection sensor or the like.

[SOLUTION] The vehicle, in which the drive wheel is driven by the motive force input by the driver and the motive force input from the motor, includes: a torque sensor configured to detect a torque of the motive force input by the driver; an input speed sensor configured to detect an input speed of the motive force input by the driver; and a controller configured to control the motor, wherein the controller is configured to: calculate a work amount of the driver based on the torque detected by the torque sensor and the input speed detected by the input speed sensor, and estimate an oxygen intake amount of the driver from the work amount; estimate a maximum oxygen intake amount of the driver from a physical parameter of the driver; and control the motor such that an exercise intensity calculated from the oxygen intake amount and the maximum oxygen intake amount approaches a target exercise intensity of the driver.

1
100
20
14
41
DRIVING MODE INPUT UNIT
42
PHYSICAL PARAMETER INPUT UNIT
43
TARGET EXERCISE INTENSITY INPUT UNIT
VEHICLE SPEED SENSOR
15
TORQUE SENSOR
16
CADENCE SENSOR
CONTROLLER
POWER STORAGE UNIT
MOTOR
TRANSMISSION MECHANISM
30
10
11
13
3b
DRIVE WHEEL

*FIG. 2*



Processed by Luminess, 75001 PARIS (FR)

## Description

TECHNICAL FIELD

The present invention relates to a vehicle, an input device, a vehicle control method, an input device control method, and a program.

BACKGROUND ART

Patent Document 1 discloses an electrically assisted bicycle (vehicle) that detects the pedaling force when a driver pedals by means of a strain gauge, drives an electric motor to generate an electric assist force that assists the pedaling force when the pedaling force is greater than a pedaling force level that enables aerobic exercise, and applies a load force to the pedaling force by rotational resistance of the electric motor when the pedaling force is lower than the pedaling force level.

PRIOR ART DOCUMENT

PATENT DOCUMENT

Patent Document 1: JP 2003-231491 A

SUMMARY OF INVENTION

PROBLEM TO BE SOLVED BY THE INVENTION

However, in the electrically assisted bicycle of Patent Document 1, the pedaling force level that enables the aerobic exercise is set based on a heart rate of the driver that is detected using a heart rate detection sensor. Therefore, when driving the electrically assisted bicycle, the driver is inconvenienced by having to wear the heart rate detection sensor for detecting the heart rate.

The present invention has been conceived in light of the problems mentioned above, and an object thereof is to control a motor so as to conform to a target exercise intensity of a driver without the driver wearing a heart rate detection sensor or the like.

MEANS FOR SOLVING THE PROBLEM

In one aspect of the present invention, a vehicle in which a drive wheel is driven by a motive force input by a driver and a motive force input from a motor, includes: a torque sensor configured to detect a torque of the motive force input by the driver; an input speed sensor configured to detect an input speed of the motive force input by the driver; and a controller configured to control the motor, wherein the controller is configured to: calculate a work amount of the driver based on the torque detected by the torque sensor and the input speed detected by the input speed sensor, and estimate an oxygen intake amount of the driver from the work amount; estimate a maximum oxygen intake amount of the driver from a physical parameter of the driver; and control the motor such that an exercise intensity calculated from the oxygen intake amount and the maximum oxygen intake amount approaches a target exercise intensity of the driver.

EFFECT OF THE INVENTION

According to one aspect of the present invention, the exercise intensity of the driver can be calculated by estimating the oxygen intake amount of the driver from the torque detected by the torque sensor and the input speed detected by the input speed sensor and by estimating the maximum oxygen intake amount from the physical parameter of the driver. Therefore, it is possible to control the motor so as to conform to the target exercise intensity of the driver without the driver having to wear a heart rate detection sensor or the like.

BRIEF DESCRIPTION OF DRAWINGS

[FIG. 1] FIG. 1 is a side view for explaining an outline of a vehicle according to an embodiment of the present invention.
[FIG. 2] FIG. 2 is a control block diagram of the vehicle.
[FIG. 3] FIG. 3 is a flowchart for explaining motor control in the vehicle.
[FIG. 4] FIG. 4 is a flowchart for explaining assist ratio correction calculation.
[FIG. 5] FIG. 5 is a diagram for explaining a relationship between a rotational speed of a crank and an oxygen intake amount of the driver.
[FIG. 6] FIG. 6 is a diagram for explaining a relationship between an input torque and the oxygen intake amount of the driver.
[FIG. 7] FIG. 7 is a control block diagram of the vehicle.
[FIG. 8] FIG. 8 is a diagram showing a screen displayed on an input device when the driver is driving the vehicle.
[FIG. 9] FIG. 9 is a diagram showing an example of an exercise intensity setting map in an exercise intensity setting screen.
[FIG. 10] FIG. 10 is a diagram showing an exercise intensity distribution region when age is input in the exercise intensity setting screen shown in FIG. 9.
[FIG. 11] FIG. 11 is a diagram showing the exercise intensity distribution region when gender is further input in the exercise intensity setting screen shown in FIG. 10.
[FIG. 12] FIG. 12 is a diagram showing a state in which the driver has moved a pointer within the exercise intensity setting map in the exercise intensity setting screen shown in FIG. 11.
[FIG. 13] FIG. 13 is a diagram showing a state in which an older-age-group exercise intensity distribution region and a younger-age-group exercise intensity distribution region are displayed in an overlapping manner on the exercise intensity setting map.

[FIG. 14] FIG. 14 is a diagram showing a state in which positions of pointers set by other users are displayed in an overlapping manner on the exercise intensity setting map.

[FIG. 15] FIG. 15 is a diagram showing a state in which a relationship between age and standard maximum oxygen intake amount and a relationship between age and standard body weight are displayed.

[FIG. 16] FIG. 16 is a diagram showing another example of the exercise intensity setting map in the exercise intensity setting screen.

## DESCRIPTION OF EMBODIMENTS

In the following, an electrically assisted bicycle (hereinafter, simply referred to as a "bicycle") 1 serving as a vehicle according to an embodiment of the present invention will be described with reference to the drawings.

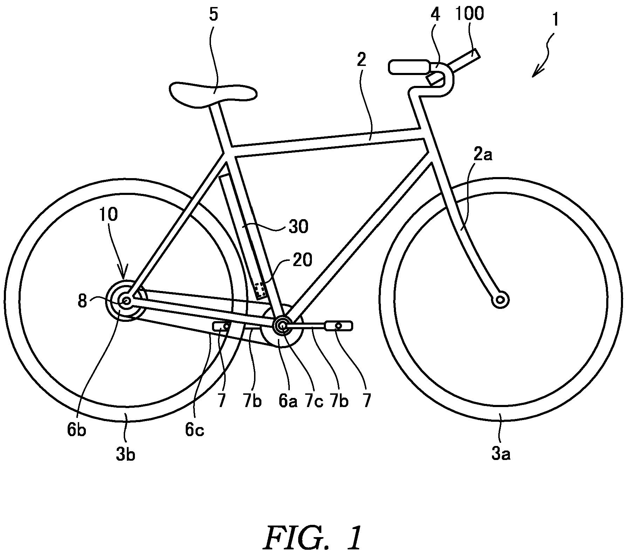

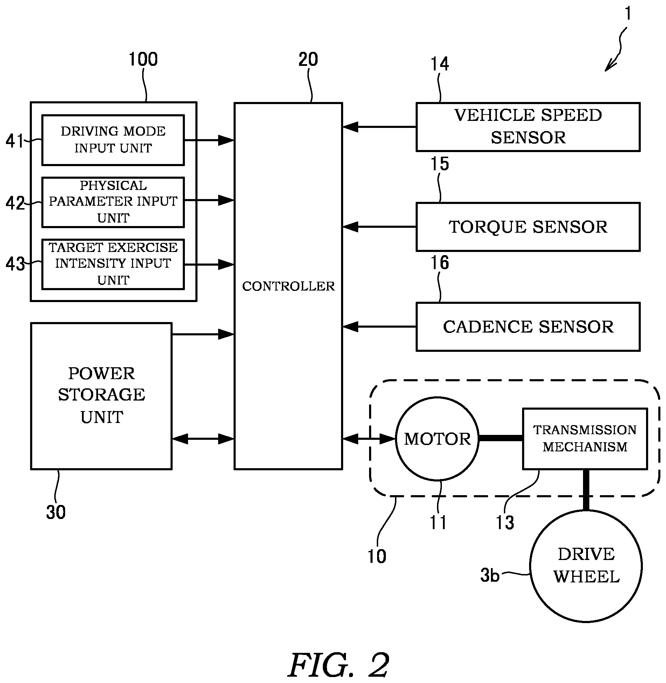

First, an overall configuration of the bicycle 1 will be described with reference to FIGs. 1 and 2.

FIG. 1 is a side view for explaining an outline of the bicycle 1. FIG. 2 is a control block diagram of the bicycle 1.

As shown in FIGs. 1 and 2, the bicycle 1 includes a frame 2, a front wheel 3a, a rear wheel 3b serving as a drive wheel, a handle 4, a saddle 5, a drive sprocket 6a, a driven sprocket 6b, a chain 6c, a pair of pedals 7, a pair of crank arms 7b serving as cranks, a crankshaft 7c, a support shaft 8, an electric assist unit 10, a vehicle speed sensor 14, a torque sensor 15, a cadence sensor 16 serving as an input speed sensor, a controller 20, a power storage unit 30, and an input device 100 serving as an input unit.

As shown in FIG. 1, the bicycle 1 is driven by the driver straddling and sitting on the saddle 5 and pedaling the crank arms 7b via the pedals 7. The bicycle 1 drives the rear wheel 3b by a pedaling force applied on the pedals (driving torque) transmitted from the crank arms 7b to the crankshaft 7c and a driving force (assist torque) exerted by the electric assist unit 10 having a magnitude according to the pedaling force applied on the pedals. In other words, the bicycle 1 is configured such that the rear wheel 3b is driven by the motive force input by the driver and the motive force input from a motor 11 (see FIG. 2) of the electric assist unit 10, which will be described later.

The frame 2 is a so-called diamond-type frame having a substantially parallelogram shape in side view. The front wheel 3a and the rear wheel 3b are rotatably attached to the frame 2. The frame 2 has a front fork 2a that supports the front wheel 3a.

The front wheel 3a is steered left and right by rotation of the front fork 2a according to an operation of the handle 4 by the driver.

The rear wheel 3b rotates about the support shaft 8. The driven sprocket 6b and the electric assist unit 10 are attached to the rear wheel 3b.

The driving torque is transmitted to the driven sprocket 6b via the chain 6c suspended between the driven sprocket 6b and the drive sprocket 6a to which the driving force from the crank arms 7b is input. Note that, instead of the chain 6c, another motive force transmission member such as a belt that transmits the driving torque may be applied.

The pedals 7 are members to which the driver inputs the driving torque. The pedals 7 are connected to the crankshaft 7c via the crank arms 7b.

The support shaft 8 is attached to the frame 2. The support shaft 8 is provided so as to be non-rotatable with respect to the frame 2.

As shown in FIG. 2, the electric assist unit 10 has the motor 11 and a transmission mechanism 13. The electric assist unit 10 generates an assist torque that assists the pedaling force applied on the pedals by the driver.

The motor 11 is controlled based on a command signal from the controller 20. The motor 11 is capable of generating the driving force that assists the motive force input by the driver and a regenerative force that converts rotational energy of the rear wheel 3b into electric energy.

The transmission mechanism 13 performs gear shift of at least one of the motive force input from the driver and the motive force input from the motor 11 and outputs the motive force subjected to the shift to the rear wheel 3b. In other words, the transmission mechanism 13 may perform shift only for the motive force input from the driver, may perform shift only for the motive force input from the motor 11, or may perform shift for both the motive force input from the driver and the motive force input from the motor 11. In addition, a configuration in which the motive force input from the driver and the motive force input from the motor 11 are directly transmitted to the rear wheel 3b without providing the transmission mechanism 13 may be employed. Note that, although the transmission mechanism 13 is a manual transmission mechanism in which a shift is performed based on an operation of the driver, but the transmission mechanism 13 may be an automatic transmission mechanism in which the controller 20 executes shift control based on electric signals from the torque sensor 15 or the cadence sensor 16.

The vehicle speed sensor 14 detects a speed of the bicycle 1. Specifically, the vehicle speed sensor 14 detects a rotational speed of the rear wheel 3b. Since the vehicle speed sensor 14 only needs to detect the speed of the bicycle 1, it may, for example, detect the rotational speed of the front wheel 3a.

The torque sensor 15 detects a torque of the motive force input by the driver. Specifically, the torque sensor 15 detects the torque input from the crank arms 7b that are rotationally driven by the driver via the pedals 7.

Alternatively, the torque sensor 15 may detect the torque transmitted from the drive sprocket 6a to the driven sprocket 6b via the chain 6c.

The cadence sensor 16 detects an input speed of the motive force input by the driver. Specifically, the cadence sensor 16 detects the rotational speed of the crank arms 7b or the crankshaft 7c that are rotationally driven by the driver via the pedals 7, that is, the rotational speed of the drive sprocket 6a. Alternatively, the cadence sensor 16 may detect the rotational speed of the driven sprocket 6b that is rotationally driven by the drive sprocket 6a via the chain 6c.

The vehicle speed sensor 14, the torque sensor 15, and the cadence sensor 16 are provided separately from the electric assist unit 10. Alternatively, the vehicle speed sensor 14, the torque sensor 15, and the cadence sensor 16 may be provided in the electric assist unit 10.

The controller 20 is constituted by a microcomputer including a CPU, a RAM, a ROM, an input/output interface, and the like. The controller 20 can also be constituted by a plurality of microcomputers. The controller 20 performs various types of processing by the CPU reading and executing a program stored in the ROM. Specifically, the controller 20 controls the driving force or the regenerative force of the motor 11 based on electric signals corresponding to a magnitude of the pedaling force applied on the pedals that is input from the torque sensor 15 and the rotational speed of the crank arms 7b that is input from the cadence sensor 16. When the transmission mechanism 13 is an automatic transmission mechanism, the controller 20 performs shift control of the transmission mechanism 13. When the transmission mechanism 13 is not provided, the controller 20 controls the driving force or the regenerative force of the motor 11 according to the motive force input from the driver. The controller 20 includes an inverter, a DC-DC converter, and the like for controlling the motor 11.

The power storage unit 30 is a chargeable and dischargeable secondary battery such as a nickel-metal hydride battery, a lithium-ion battery, and so forth. The power storage unit 30 can supply electric power to the motor 11 via the controller 20 and can be charged with regenerative power from the motor 11. The power storage unit 30 supplies electric power to the controller 20. The power storage unit 30 is provided so as to be detachable from the frame 2.

The input device 100 is a mobile terminal operated by the driver. The input device 100 is constituted by a microcomputer including a CPU, a RAM, a ROM, an input/output interface, and the like. The input device 100 can also be constituted by a plurality of microcomputers. The input device 100 performs various types of processing by the CPU reading and executing a program stored in the ROM. The input device 100 is provided so as to be detachable from the handle 4 of the bicycle 1. The input device 100 is wired or wirelessly connected to the controller 20 so as to be capable of performing communication. The input device 100 has a driving mode input unit 41, a physical parameter input unit 42, and a target exercise intensity input unit 43.

Note that the input device 100 may be fixed to the bicycle 1. In addition, the input device 100 includes a microcomputer and a communication function with the controller 20, and the driving mode input unit 41, the physical parameter input unit 42, and the target exercise intensity input unit 43 may be provided separately from the input device 100.

The driving mode input unit 41 is an input unit with which a driving mode of the bicycle 1 can be input. The bicycle 1 has a standard mode that is to be used during normal driving and a fat burning mode in which the exercise intensity is to be set higher than the exercise intensity in the standard mode. The driver can switch between the standard mode and the fat burning mode by input from the driving mode input unit 41.

The physical parameter input unit 42 is an input unit with which a physical parameter of the driver can be input. The physical parameter is at least one of a gender, a body weight, an age, an exercise experience, and a physical strength of the driver.

The target exercise intensity input unit 43 is an input unit with which a target exercise intensity, which is an exercise intensity required by the driver, can be input. The target exercise intensity can be input based on a range of average driving intensity calculated based on the physical parameter of the driver. When the driver requires a higher exercise intensity or a lower exercise intensity, it is also possible to input an exercise intensity outside the range of the average driving intensity.

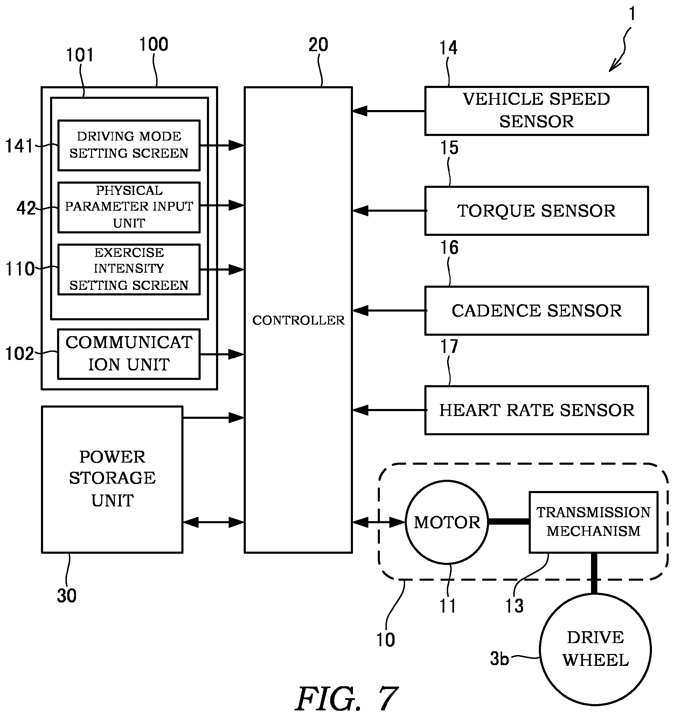

Note that the input of the physical parameter from the physical parameter input unit 42 will be described in detail later together with setting of the exercise intensity with reference to FIGs. 7 to 16.

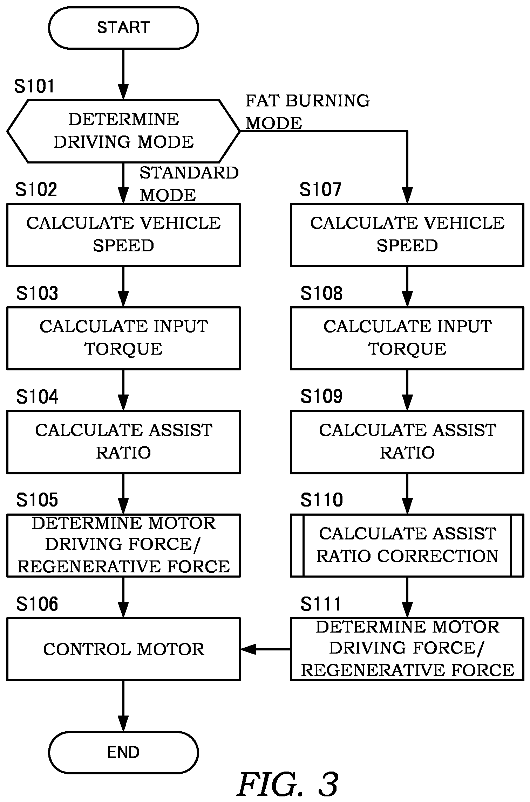

Next, control for setting the exercise intensity in the bicycle 1 will be described with reference to FIGs. 3 to 6. Here, a case where control is executed by the controller 20 will be described as an example. The present invention is not limited thereto, and for example, some control may be executed by the input device 100, and other control may be executed by the controller 20. The control for setting the exercise intensity is executed at regular time intervals by the controller 20.

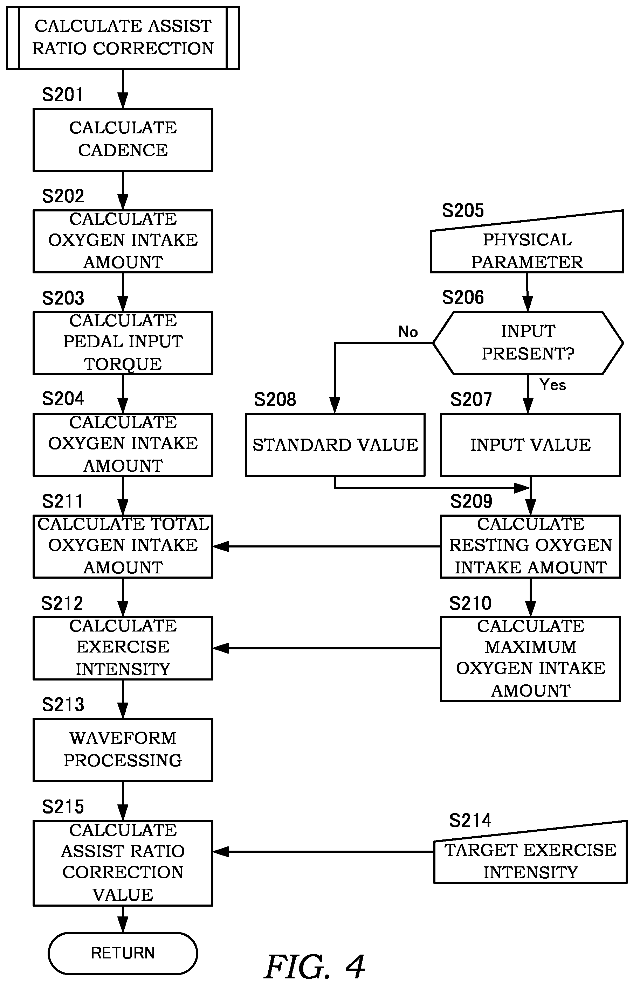

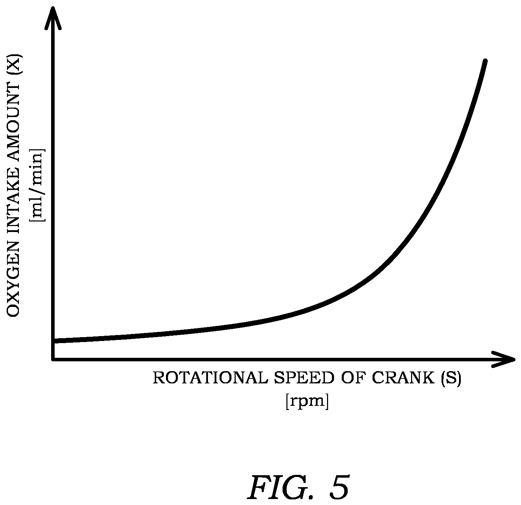

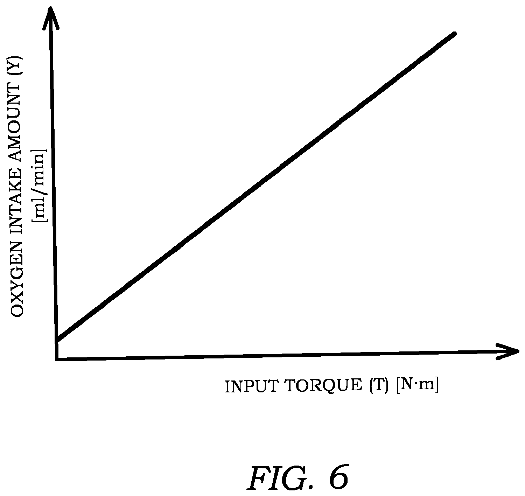

FIG. 3 is a flowchart for explaining control of the motor 11 in the bicycle 1. FIG. 4 is a flowchart for explaining assist ratio correction calculation. FIG. 5 is a diagram for explaining a relationship between the rotational speed of the crank arms 7b and the oxygen intake amount of the driver. In FIG. 5, a horizontal axis represents the rotational speed [rpm] of the crank arms 7b that are rotationally driven by the driver via the pedals 7, and a vertical axis represents the oxygen intake amount (X) [ml/min] of the driver. FIG. 6 is a diagram for explaining a relationship between the input torque and the oxygen intake amount of the driver. In FIG. 6, a horizontal axis represents the torque [N·m] input from the crank arms 7b that are rotationally driven by the driver via the pedals 7, and a vertical axis represents the oxygen intake amount (Y) [ml/min] of the driver with respect to the input torque.

First, the control of the motor 11 in the bicycle 1 will be described with reference to FIG. 3.

In step S101, the controller 20 determines whether the driving mode of the bicycle 1 is the standard mode or the fat burning mode. When it is determined in step S101 that the driving mode of the bicycle 1 is the standard mode, the process proceeds to step S102.

In step S102, the controller 20 calculates the vehicle speed of the bicycle 1. Specifically, the controller 20 calculates the speed of the bicycle 1 from the rotational speed of the rear wheel 3b and the outer diameter of the rear wheel 3b based on the electric signal input from the vehicle speed sensor 14.

In step S103, the controller 20 calculates the torque of the motive force input by the driver. Specifically, the controller 20 calculates a magnitude of the torque input by the driver among the torque transmitted to the rear wheel 3b based on the torque input via the crank arms 7b detected by the torque sensor 15 and a gear ratio of the transmission mechanism 13. At this time, the controller 20 performs waveform processing on the electric signal output in a sine wave shape by the driver alternately pedaling the left and right pedals 7 to calculate the magnitude of the torque input to the crankshaft 7c.

In step S104, the controller 20 calculates an assist ratio, which is a ratio between a power [W] input to the crankshaft 7c and a power [W] output by the motor 11. Note that the assist ratio may be calculated from a ratio between the power [W] input by the driver and a power [W] generated by the motor 11 among the torque transmitted to the rear wheel 3b. In this case, since it is a ratio of powers on the same axis and the rotational speeds are the same, it is also possible to employ a ratio of respective torques as the assist ratio.

In step S105, the controller 20 calculates the driving force or the regenerative force generated by the motor 11 based on the assist ratio calculated in step S104.

In step S106, the controller 20 controls the motor 11 based on the driving force or the regenerative force calculated in step S105.

On the other hand, when it is determined in step S101 that the bicycle 1 is in the fat burning mode, the process proceeds to step S107.

The processing from step S107 to step S109 is the same as the processing from step S101 to step S103, and therefore, description thereof is omitted here.

In step S110, the controller 20 executes the assist ratio correction calculation for correcting the assist ratio. The assist ratio correction calculation will be described in detail below with reference to FIG. 4.

In step S201 of FIG. 4, the controller 20 executes cadence calculation. Specifically, the controller 20 calculates the rotational speed of the crankshaft 7c that is rotationally driven by the driver via the pedals 7 and the crank arms 7b based on the electric signal input from the cadence sensor 16. At this time, the controller 20 performs waveform processing on the electric signal output in a sine wave shape by the driver alternately pedaling the left and right pedals 7 to calculate the rotational speed of the crank arms 7b.

In step S202, the controller 20 calculates the oxygen intake amount (X) serving as a first oxygen intake amount of the driver based on the rotational speed of the crank arms 7b calculated in step S201. The oxygen intake amount (X) is the oxygen intake amount estimated from an internal work amount of the driver.

Here, as shown in FIG. 5, a relationship between the rotational speed (S) of the crank arms 7b and the oxygen intake amount (X) of the driver is as shown in the following formula (1). Here, A, B, and C are constants set based on the physical parameter of the driver, a driving environment of the bicycle 1, and the like.

$$X = A + B \times S^{C} \quad (1)$$

Therefore, the oxygen intake amount (X) of the driver can be estimated from the rotational speed of the crank arms 7b detected by the cadence sensor 16 based on the formula (1).

Returning to FIG. 4, in step S203, the controller 20 calculates a pedal input torque exerted by the driver. Specifically, the controller 20 calculates, based on the electric signal input from the torque sensor 15, a torque input to the crankshaft 7c that is rotationally driven by the driver via the pedals 7 and the crank arms 7b. At this time, the controller 20 performs the waveform processing on the electric signal output in a sine wave shape by the driver alternately pedaling the left and right pedals 7 to calculate the magnitude of the torque input to the crankshaft 7c.

In step S204, the controller 20 calculates the oxygen intake amount (Y) serving as a second oxygen intake amount of the driver based on the torque input from the crank arms 7b calculated in step S203. The oxygen intake amount (Y) is an oxygen intake amount estimated from an external work amount of the driver.

Here, as shown in FIG. 6, a relationship between the input torque (T) and the oxygen intake amount (Y) of the driver is as shown in the following formula (2). Here, P and Q are constants set based on the physical parameter of the driver, the driving environment of the bicycle 1, and the like.

$$Y = P + Q \times T \quad (2)$$

Therefore, the oxygen intake amount (Y) of the driver can be estimated from the torque input from the crank arms 7b detected by the torque sensor 15 based on the formula (2).

Returning to FIG. 4, in step S205, the physical parameter of the driver is input to the controller 20 based on the operation of the input device 100 (the physical parameter input unit 42) by the driver.

In step S206, the controller 20 determines whether or not there has been an input of the physical parameter of the driver. When it is determined in step S206 that there has been an input of the physical parameter of the driver, the process proceeds to step S207, and the input value input by the driver is selected. On the other hand, when it is determined in step S206 that there has been no input of the physical parameter of the driver, the process proceeds to step S208, and the standard value set in advance is selected.

Note that when only some of the physical parameters have been input, the input value is selected for the item for which there has been input, and the standard value is selected for the item for which there has been no input.

As described above, by inputting the physical parameter from the input device 100, it is possible to estimate the exercise intensity based on the average value of an attribute based on the physical parameter of the driver. Therefore, it is possible to improve an estimation accuracy of the exercise intensity.

In addition, since the physical parameter and the target exercise intensity, which will be described later, can be input from the input device 100, for example, the physical parameter and the target exercise intensity can be input in advance in the input device 100, and control for setting the exercise intensity can be performed by attaching the input device 100 to the bicycle 1.

In step S209, the controller 20 calculates the resting oxygen intake amount (U) of the driver based on the physical parameter of the driver. Specifically, the controller 20 calculates the resting oxygen intake amount (U), which is the oxygen intake amount of the driver at rest, based on a value statistically obtained from the physical parameters such as the gender, the body weight, the age, the exercise experience, and the physical strength of the driver.

In step S210, the controller 20 calculates the maximum oxygen intake amount (V) of the driver. Specifically, the controller 20 calculates the maximum oxygen intake amount (V) of the driver based on the value statistically obtained from the physical parameters such as the gender, the body weight, the age, the exercise experience, and the physical strength of the driver.

In step S211, the controller 20 calculates a total oxygen intake amount (Z) serving as the oxygen intake amount of the driver. Specifically, the controller 20 calculates the total oxygen intake amount (Z) when the driver is in the exercise state based on the following formula (3) from the oxygen intake amount (X) that is estimated from the rotational speed of the crank arms 7b detected by the cadence sensor 16, the oxygen intake amount (Y) that is estimated from the torque detected by the torque sensor 15, and the resting oxygen intake amount (U) of the driver at rest obtained from the physical parameter.

$$Z = U + X + Y \quad (3)$$

As described above, by calculating the work amount of the driver by combining: the oxygen intake amount (X) estimated from the rotational speed detected by the cadence sensor 16, that is, the internal work amount of the driver; and the oxygen intake amount (Y) estimated from the torque detected by the torque sensor 15, that is, the external work amount of the driver, it is possible to improve the estimation accuracy of the total oxygen intake amount (Z).

In step S212, the controller 20 calculates the exercise intensity (W) [%] of the driver. Specifically, the controller 20 calculates the exercise intensity (W) when the driver is in the exercise state, based on the following formula (4), from the resting oxygen intake amount (U) of the driver at rest obtained from the physical parameter, the total oxygen intake amount (Z) when the driver is in the exercise state, and the maximum oxygen intake amount (V) of the driver.

$$W\,[\%] = (Z - U)/(V - U) \times 100 \quad (4)$$

In step S213, the controller 20 executes the waveform processing. Normally, when estimating the total oxygen intake amount (V) of the driver, it can be accurately estimated by using the heart rate of the driver. However, in this embodiment, the cadence sensor 16 and the torque sensor 15 are used without using a heart rate detection sensor in order to eliminate the inconvenience of the driver having to wear a heart rate detection sensor or the like. In step S213, the waveform processing is performed to approximate the exercise intensity calculated based on the heart rate of the driver because the value of the maximum oxygen intake amount (V) of the driver varies linearly with respect to the amount of exercise.

In step S214, the target exercise intensity desired by the driver is input to the controller 20 based on information input according to the operation of the input device 100 (the target exercise intensity input unit 43) by the driver.

As described above, since the driver can input the target exercise intensity from the input device 100, it is possible to input not only the exercise intensity within the range of the average driving intensity calculated based on the physical parameter of the driver, but also the exercise intensity outside the range of the average driving intensity when a higher exercise intensity or a lower exercise intensity is required.

In step S215, the controller 20 corrects the assist ratio, which is the ratio between the torque input by the driver and the torque generated by the motor 11 among the torque transmitted to the rear wheel 3b calculated in step S109, based on values of the target driving intensity of the driver and the exercise intensity (W) when the driver is in the exercise state subjected to the waveform processing. Specifically, when the target driving intensity of the driver is smaller than the exercise intensity (W) when the driver is in the exercise state, the controller 20 increases the proportion of the torque generated by the motor 11. On the other hand, when the target driving intensity of the driver is higher than the exercise intensity (W) when the driver is in the exercise state, the controller 20 decreases the proportion of the torque generated by the motor 11. After correction of the assist ratio is executed in step S215, the process proceeds to step S111.

Returning to FIG. 3, in step S111, the controller 20 calculates the driving force or the regenerative force to be generated by the motor 11 based on the assist ratio calculated in step S111. Specifically, when the proportion of the torque generated by the motor 11 is to be increased, the controller 20 transmits the electric signal such that the motor 11 outputs a larger torque. On the other hand, when the proportion of the torque generated by the motor 11 is to be decreased, the controller 20 transmits the electric signal such that the motor 11 outputs a smaller torque. In addition, when it is not sufficient even if the torque generated by the motor 11 is set to 0 to achieve the target exercise intensity, the controller 20 performs regenerative control of the motor 11 so as to generate a resistance force in the direction opposite to the torque input by the driver. Therefore, by controlling the driving force or the regenerative force of the motor 11, it is possible to control the motor 11 such that the exercise intensity approaches the target exercise intensity of the driver in a wide range.

Then, the process proceeds to step S106, and the controller 20 controls the motor 11 based on the driving force or the regenerative force calculated in step S111.

As described above, the controller 20 calculates the work amount of the driver based on the torque detected by the torque sensor 15 and the rotational speed detected by the cadence sensor 16, estimates the total oxygen intake amount (Z) of the driver from the work amount, estimates the maximum oxygen intake amount (V) of the driver from the physical parameter of the driver, and controls the motor 11 such that the exercise intensity calculated from the total oxygen intake amount (Z) and the maximum oxygen intake amount (V) approaches the target exercise intensity of the driver.

As a result, it is possible to calculate the exercise intensity of the driver by estimating the total oxygen intake amount (Z) of the driver from the torque detected by the torque sensor 15 and the rotational speed detected by the cadence sensor 16 and by estimating the maximum oxygen intake amount (V) from the physical parameter of the driver. Therefore, the motor 11 can be controlled so as to conform to the target exercise intensity required by the driver without the driver having to wear a heart rate detection sensor or the like.

At this time, since the transmission mechanism 13 is provided, the driving force or the regenerative force of the motor 11 can be increased based on the gear ratio, and so, it is possible to perform the control such that the exercise intensity approaches the target exercise intensity of the driver in a wider range.

In addition, when the driving mode of the bicycle 1 is the fat burning mode, the controller 20 executes the control of the motor 11 such that the exercise intensity calculated from the total oxygen intake amount (Z) and the maximum oxygen intake amount (V) described above approaches the target exercise intensity.

As a result, when the driver intentionally selects the fat burning mode instead of the standard mode, the control of the motor 11 is executed such that the exercise intensity approaches the target exercise intensity, and so, it is possible to set the exercise intensity according to an intention of the driver.

In addition, since the driver inputs the target exercise intensity from the input device 100 and the motor 11 is controlled based on the input target exercise intensity, it is possible to execute, according to a request of the driver, the control of the motor 11 that allows the driver to drive easily with a smaller load or the control of the motor 11 that applies a load optimal for fat burning of the driver.

Next, the input device 100 applied to the bicycle 1 will be described with reference to FIGs. 7 to 16. Note that, in the following description, the same reference numerals are assigned to the same configurations as those of the above-mentioned embodiment, and overlapping description will be appropriately omitted.

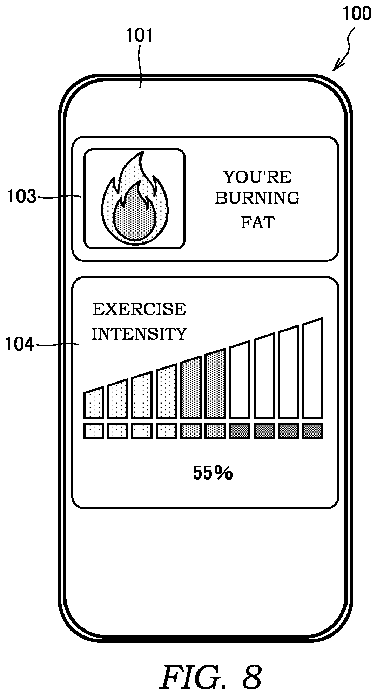

First, the bicycle 1 to which the input device 100 is applied will be described with reference to FIGs. 7 and 8.

FIG. 7 is a control block diagram of the bicycle 1. FIG. 8 is a diagram showing a screen displayed on the input device 100 when the driver is driving the bicycle 1. Note that description of the overall configuration of the bicycle 1 is omitted because it is the same as that shown in FIG. 1.

As shown in FIG. 7, the bicycle 1 may include, for example, a heart rate sensor 17 as a biosensor capable of acquiring information that forms a basis of calculation of exercise load.

The heart rate sensor 17 detects the heart rate of the driver. Specifically, the heart rate sensor 17 is, for example, attached to a part of the body of the driver, such as a wrist, and detects the heart rate of the driver by irradiating light toward the skin and detecting light reflected by a blood vessel.

The controller 20 controls the driving force or the regenerative force of the motor 11 based on the electric signals corresponding to the magnitude of the pedaling force applied on the pedals that is input from the torque sensor 15, the rotational speed of the crank arms 7b that is input from the cadence sensor 16, and the heart rate of the driver that is detected by the heart rate sensor 17.

The input device 100 is a mobile terminal operated by the driver. The input device 100 is for setting the target exercise intensity of the driver. The input device 100 is a smartphone that is wired or wirelessly connected to the controller 20 of the bicycle 1 so as to be capable of performing communication. The input device 100 has a touch screen 101 that serves as both a display unit and an input unit and a communication unit 102. Note that the input device 100 may not be a smartphone but a device that is fixed to the bicycle 1 with equivalent functions.

As shown in FIG. 7, the touch screen 101 has a driving mode setting screen 141, the physical parameter input unit 42, and an exercise intensity setting screen 110.

The driving mode setting screen 141 is a screen for selecting the driving mode of the bicycle 1. The bicycle 1 has the standard mode that is used during the normal driving and the fat burning mode in which the exercise intensity is set higher than the exercise intensity in the standard mode. The driver can set the driving mode to the standard mode or the fat burning mode by input from the driving mode setting screen 141.

As shown in FIG. 8, when the driver is driving the bicycle 1 in a state in which the driving mode is switched to the fat burning mode, a state display unit 103 and an exercise intensity graph 104 are displayed on the touch screen 101.

A current state of the driver is displayed on the state display unit 103. Here, when the driver is performing aerobic exercise that burns fat, the state display unit 103 displays an indication that fat burning is in progress. As a result, the current state of the driver can be visually presented. In addition to this, warming up, aerobic exercise, anaerobic exercise, maximum intensity, and the like can be displayed on the state display unit 103.

A level of the current exercise intensity of the driver is displayed in a graph form on the exercise intensity graph 104. Thus, the exercise intensity of the driver can be visually presented. The level of the exercise intensity is calculated based on the oxygen intake amount calculated by the controller 20 from the magnitude of the pedaling force applied on the pedals that is input from the torque sensor 15 and the rotational speed of the crank arms 7b that is input from the cadence sensor 16, or the heart rate of the driver that is detected by the heart rate sensor 17.

The physical parameter input unit 42 is the input unit capable of inputting the physical parameter of the driver. The physical parameter includes the gender, the body weight, the age, and the exercise experience of the driver.

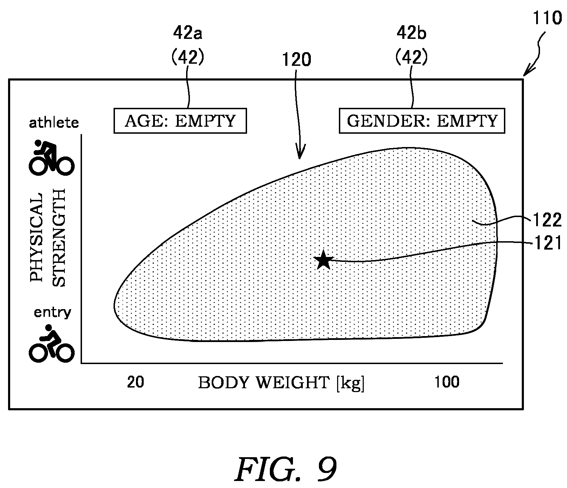

The exercise intensity setting screen 110 is a screen for setting the target exercise intensity of the driver. The exercise intensity setting screen 110 will be described in detail later with reference to FIGs. 9 to 16.

The communication unit 102 is a communication module capable of communicating mutually with an external server (not shown). The communication unit 102 can perform data communication using a mobile phone communication network, a wireless LAN (Local Area Network), or the like.

Next, the exercise intensity setting screen 110 will be described with reference to FIGs. 9 to 16.

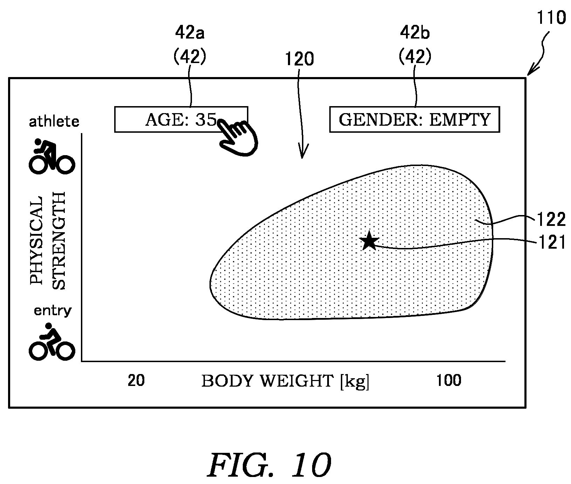

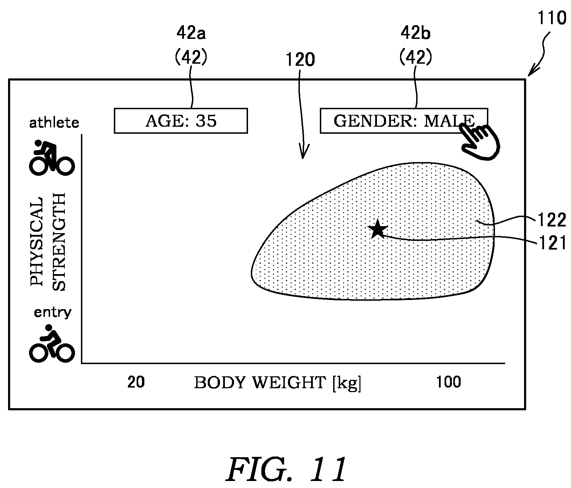

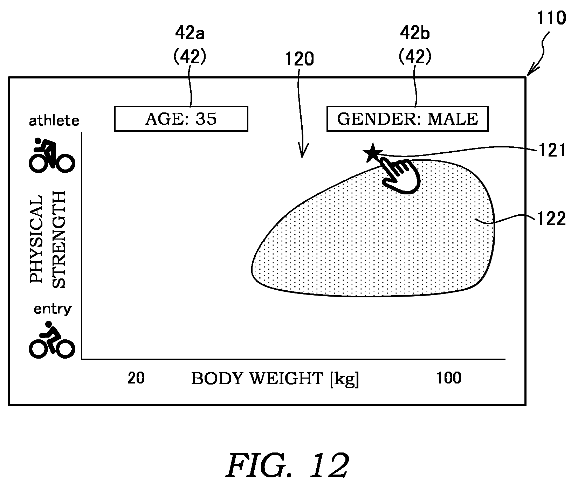

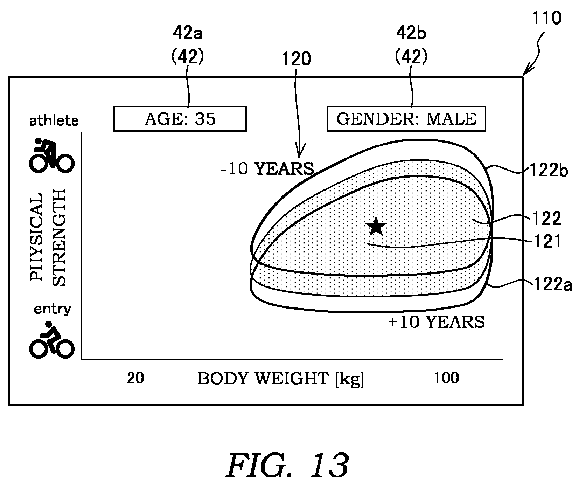

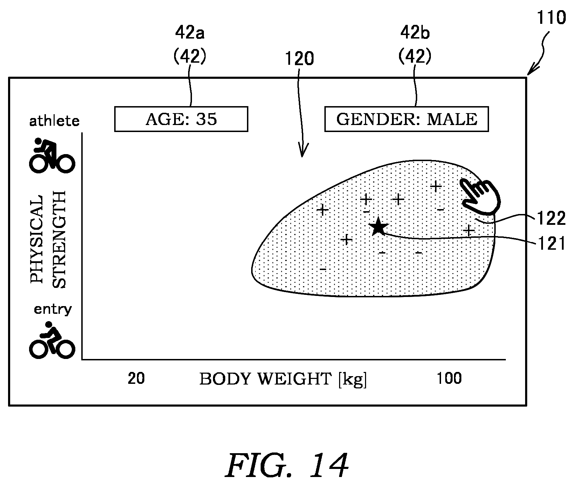

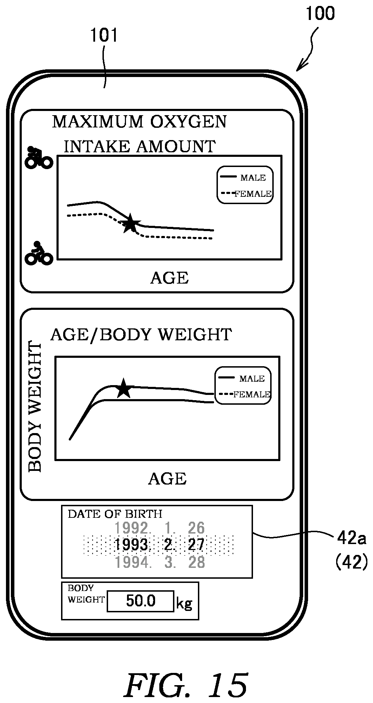

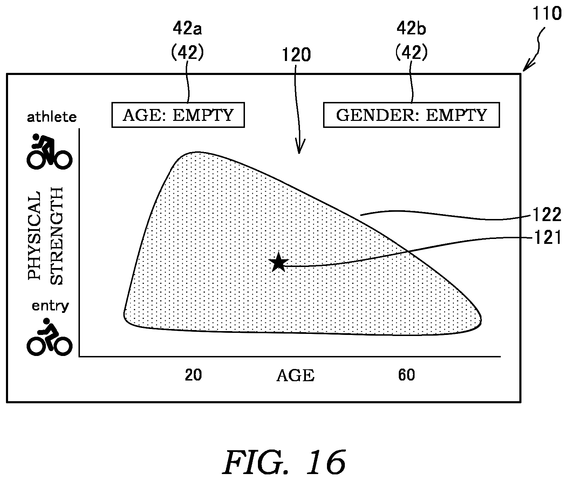

FIG. 9 is a diagram showing an example of an exercise intensity setting map 120 in the exercise intensity setting screen 110. FIG. 10 is a diagram showing an exercise intensity distribution region 122 when age is input in the exercise intensity setting screen 110 shown in FIG. 9. FIG. 11 is a diagram showing the exercise intensity distribution region 122 when gender is further input in the exercise intensity setting screen 110 shown in FIG. 10. FIG. 12 is a diagram showing a state in which the driver has moved a pointer 121 within the exercise intensity setting map 120 in the exercise intensity setting screen 110 shown in FIG. 11. FIG. 13 is a diagram showing a state in which an older-age-group exercise intensity distribution region 122a and a younger-age-group exercise intensity distribution region 122b are displayed in an overlapping manner on the exercise intensity setting map 120. FIG. 14 is a diagram showing a state in which positions of the pointers 121 set by other users are displayed in an overlapping manner on the exercise intensity setting map 120. FIG. 15 is a diagram showing a state in which a relationship between age and standard maximum oxygen intake amount and a relationship between age and standard body weight are displayed. FIG. 16 is a diagram showing another example of the exercise intensity setting map 120 in the exercise intensity setting screen 110.

As shown in FIG. 9, the exercise intensity setting screen 110 is a screen for setting the target exercise intensity of the driver. The exercise intensity setting screen 110 is displayed when the bicycle 1 is set to the fat burning mode. As a result, the exercise intensity setting screen 110 is displayed when the driver intentionally selects the fat burning mode instead of the standard mode, and so, the setting of the target exercise intensity according to an intention of the driver is made possible. The physical parameter input unit 42 and the exercise intensity setting map 120 are displayed on the exercise intensity setting screen 110.

The physical parameter input unit 42 has an age input unit 42a and a gender input unit 42b.

The age input unit 42a is an input part for inputting the age of the driver. When the driver taps the age input unit 42a, a numeric input pad (not shown) for inputting numbers is displayed on the exercise intensity setting screen 110. When the driver inputs his or her age by using this numeric input pad, the age as one of the physical parameters is input.

The gender input unit 42b is an input part for inputting the gender of the driver. When the driver taps the gender input unit 42b, options for gender are displayed on the exercise intensity setting screen 110 (not shown). When the driver selects his or her gender from these gender options, gender as one of the physical parameters is input.

In the exercise intensity setting map 120, one of the vertical axis and the horizontal axis indicates one of the physical strength parameters of the driver, and the other of the vertical axis and the horizontal axis indicates one of the physical parameters of the driver. Here, a case in which the vertical axis indicates the physical strength that is set based on the maximum oxygen intake amount, which is one of the physical strength parameters of the driver, and the horizontal axis indicates the body weight [kg], which is one of the physical parameters of the driver, will be described as an example. The vertical axis is set so as to approach "athlete" having higher physical strength as it goes up and approach "entry" who is a beginner as it goes down. The horizontal axis is set such that the body weight increases as it goes to the right and the body weight decreases as it goes to the left.

The physical strength parameter is not only set based on the maximum oxygen intake amount or the maximum heart rate of the driver, but may be set based on any index having a correlation with the maximum oxygen intake amount. The physical strength parameter includes, for example, an ankle brachial index (ABI: Ankle Brachial Index), a brachial-ankle pulse wave velocity (baPWV: brachial-ankle Pulse Wave Velocity), an acceleration plethysmogram coefficient, a high density lipoprotein (HDL: High Density Lipoprotein), a lower limb skeletal muscle mass, a vital capacity, a numerical value of muscle strength measurement, a numerical value of physical strength measurement, or the like of the driver.

The pointer 121 and the exercise intensity distribution region 122 are displayed on the exercise intensity setting map 120.

The pointer 121 indicates values of body weight and physical strength set by default. In a default state, the pointer 121 is displayed at a position substantially in the center of the exercise intensity distribution region 122. The pointer 121 can be moved from the default position to another position by an operation of the driver. As will be described later specifically, when the driver moves the pointer 121 to another position within the exercise intensity setting map 120, the target exercise intensity in the bicycle 1 is set based on the values of body weight and physical strength at this position. When the pointer 121 is not moved from the default position within the exercise intensity setting map 120, the target exercise intensity in the bicycle 1 is set based on the values of body weight and physical strength at the default position. In other words, the exercise intensity in the bicycle 1 can be set based on the position at which the pointer 121 is set within the exercise intensity setting map 120.

The exercise intensity distribution region 122 is a region set by default around the pointer 121, and it is set based on default information of the physical parameter of the driver. The exercise intensity distribution region 122 is set based on the physical parameter for a group including the age of the driver. Specifically, the exercise intensity distribution region 122 is set as a region, in which the driver can perform the aerobic exercise that burns fat, based on the physical parameter of the driver. The exercise intensity distribution region 122 is a region set so as to include all genders based on a relationship between the age of the driver and the average body weight and a relationship between the age of the driver and the average maximum oxygen intake amount. In other words, the exercise intensity distribution region 122 is set as a region plotted by adding a distribution of the average body weight to the relationship between the age of the driver and the average maximum oxygen intake amount regardless of the gender of the driver. In a default state in which there is no input of the physical parameter of the driver, the exercise intensity distribution region 122 is set as the widest region.

As shown in FIG. 10, when the driver inputs his or her age from the age input unit 42a, the exercise intensity distribution region 122 is changed so as to become narrower. This is because the group including the age of the driver is narrowed down and the groups not including the age of the driver are excluded. As described above, the display of the exercise intensity distribution region 122 is changed based on the input physical parameter.

Here, since the age of the driver is input as "35 years old", the exercise intensity distribution region 122 is changed to a region of the average exercise intensity based on the physical parameter of the group including the age of the driver. Here, the group including the age of the driver is set to, for example, a range from 35 years old to 39 years old in increments of 5 years or a range from 30 years old to 39 years old in increments of 10 years.

As shown in FIG. 11, when the driver selects his or her age from the gender input unit 42b, the exercise intensity distribution region 122 is changed so as to become narrower. This is because the group including the gender of the driver is narrowed down and the groups not including the gender of the driver are excluded. As described above, the display of the exercise intensity distribution region 122 is changed based on the input physical parameter.

Here, since "male" is selected as the gender of the driver, the exercise intensity distribution region 122 is changed to a region of the average exercise intensity based on the physical parameter of the group including the age of the driver. Here, the group including the age of the driver is set to "male" among all genders.

In addition, when "male" is input as the gender of the driver after "35 years old" is input as the age of the driver, the exercise intensity distribution region 122 is changed so as to become narrower further. In other words, the exercise intensity distribution region 122 is changed so as to become narrower as the number of types of input physical parameters increases. Therefore, the group is narrowed down to the group including the physical parameters input by the driver and the groups not including the physical parameter of the driver are excluded, and so, it is possible to improve an accuracy of the region indicated by the exercise intensity distribution region 122.

As shown in FIG. 12, the driver can change the target exercise intensity from the target exercise intensity that is set based on the values of the body weight and the physical strength set by default to the target exercise intensity required by the driver by moving the pointer 121 from the state shown in FIG. 11.

Specifically, when the driver moves the pointer 121 towards "athlete" in the direction of the physical strength, the target exercise intensity is changed so as to become higher. On the other hand, when the driver moves the pointer 121 towards "entry" in the direction of the physical strength, the target exercise intensity is changed so as to become lower.

In addition, when the driver moves the pointer 121 in the direction in which the value of the body weight increases, the target exercise intensity is changed so as to become higher because the target exercise intensity is set according to the physical parameter of a person whose body weight is greater than that of the driver. On the other hand, when the driver moves the pointer 121 in the direction in which the value of the body weight decreases, the target exercise intensity is changed so as to become lower because the target exercise intensity is set according to the physical parameter of a person whose body weight is less than that of the driver.

In the example shown in FIG. 12, the driver has largely moved the pointer 121 from the default position towards "athlete" in the direction of the physical strength, and so, the target exercise intensity is changed so as to become significantly higher.

Based on the target exercise intensity input from the input device 100, the controller 20 sets the assist ratio, which is the ratio between the power [W] input to the crankshaft 7c and the power [W] output by the motor 11. Specifically, when the exercise intensity is to be lowered, the controller 20 increases the proportion of the torque generated by the motor 11. On the other hand, when the exercise intensity is to be increased, the controller 20 decreases the proportion of the torque generated by the motor 11. Note that the assist ratio may be set from the ratio between the power [W] input by the driver and the power [W] generated by the motor 11 among the torque transmitted to the rear wheel 3b. In this case, since it is the ratio of the powers on the same axis and the rotational speeds are the same, it is also possible to employ the ratio of respective torques as the assist ratio.

When the proportion of the torque generated by the motor 11 is to be increased, the controller 20 transmits the electric signal so that the motor 11 outputs a larger torque. On the other hand, when the proportion of the torque generated by the motor 11 is to be decreased, the controller 20 transmits the electric signal such that the motor 11 outputs a smaller torque. In addition, when it is not sufficient even if the torque generated by the motor 11 is set to 0 to achieve the target exercise intensity, the controller 20 performs regenerative control of the motor 11 so as to generate a resistance force in the direction opposite to the torque input by the driver. Therefore, by controlling the driving force or the regenerative force of the motor 11, it is possible to control the motor 11 such that the exercise intensity approaches the target exercise intensity required by the driver in a wide range.

As described above, on the exercise intensity setting screen 110 of the input device 100, the exercise intensity setting map 120, in which one of the vertical axis and the horizontal axis is one of the physical strength parameters of the driver and the other of the vertical axis and the horizontal axis is one of the physical parameters of the driver, is displayed. The driver can set the exercise intensity in the bicycle 1 simply by setting the position of the pointer 121 indicating the values of the physical parameter and the physical strength parameter with reference to the exercise intensity distribution region 122 that is set based on the default information of the physical parameter displayed on the exercise intensity setting map 120. Therefore, the target exercise intensity can be set by intuitive operation, and the burden on the driver in the setting of the target exercise intensity can be reduced.

In addition, since the bicycle 1 includes the transmission mechanism 13, the driving force or the regenerative force of the motor 11 can be increased based on the gear ratio. Therefore, it is possible to perform the control such that the exercise intensity approaches the target exercise intensity required by the driver in a wider range.

As shown in FIG. 13, the older-age-group exercise intensity distribution region 122a and the younger-age-group exercise intensity distribution region 122b are displayed on the exercise intensity setting map 120 in an overlapping manner with the exercise intensity distribution region 122.

The older-age-group exercise intensity distribution region 122a is set based on the default information of the physical parameter of the group whose age is higher than that of the driver. The younger-age-group exercise intensity distribution region 122b is set based on the default information of the physical parameter of the group whose age is lower than that of the driver.

Here, since the age of the driver is input as "35 years old", the group including the age of the driver is set to the range from 30 years old to 39 years old in the case of increments of 10 years. In contrast, the older-age-group exercise intensity distribution region 122a is set to the group of + 10 years old, that is, the range from 40 years old to 49 years old. In addition, the younger-age-group exercise intensity distribution region 122b is set to the group of -10 years old, that is, the range from 20 years old to 29 years old.

By displaying the older-age-group exercise intensity distribution region 122a and the younger-age-group exercise intensity distribution region 122b, when the driver feels that his or her subjective age is higher than his or her actual age, the driver can set the target exercise intensity within the older-age-group exercise intensity distribution region 122a of the group in the next older age bracket, and when the driver feels that his or her subjective age is lower than his or her actual age, the driver can set the target exercise intensity within the younger-age-group exercise intensity distribution region 122b of the group in the next younger age bracket.

Note that, similarly to the exercise intensity distribution region 122, the older-age-group exercise intensity distribution region 122a and the younger-age-group exercise intensity distribution region 122b are also changed so as to become narrower as the number of types of input physical parameters increases in response to the physical parameters input by the driver.

As shown in FIG. 14, the positions of the pointers 121 set by other users can be acquired from a server and displayed in an overlapping manner on the exercise intensity setting map 120.

By doing so, the driver can refer to the target exercise intensities set by members belonging to a specific team, for example, and so, the driver can set the target exercise intensity to be the same as the target exercise intensities set by other members or set the target exercise intensity to be higher than the target exercise intensities set by other members.

Note that members belonging to a specific team are also displayed so as to be identifiable by displaying, for example, different symbols (here, two types of "+" and "-") or different colors for each group including the age of the member.

As shown in FIG. 15, a relationship between the age and the standard maximum oxygen intake amount can be displayed separately for males and females on the touch screen 101 of the input device 100, and a relationship between the age of the driver and the maximum oxygen intake amount can be plotted. As a result, the driver can compare his or her own value of the maximum oxygen intake amount with a standard value.

In addition, a relationship between the age and the standard body weight can be displayed separately for males and females on the touch screen 101 of the input device 100, and a relationship between the age of the driver and the body weight can be plotted. As a result, the driver can compare his or her own value of body weight with a standard value.

In addition, as shown in FIG. 15, a date of birth of the driver may be input from the age input unit 42a. As a result, the age of the driver at that time can be calculated from date data held by the input device 100. Therefore, even if time elapses since the driver last input his or her age, it is not necessary for the driver to re-input his or her age.

Note that, as shown in FIG. 16, the horizontal axis may be set to age, which is one of the physical parameters of the driver. Also in this case, the operational advantages similar to those in the case where the horizontal axis is set to the body weight can be obtained.

The configuration and operational advantages of this embodiment described above will be described collectively.

(1) (20) (21) The bicycle 1, in which the rear wheel 3b is driven by the motive force input by the driver and the motive force input from the motor 11, comprises: the torque sensor 15 configured to detect the torque of the motive force input by the driver; the cadence sensor 16 configured to detect the rotational speed of the motive force input by the driver; and the controller 20 configured to control the motor 11, wherein the controller 20 is configured to: calculate the work amount of the driver based on the torque detected by the torque sensor 15 and the rotational speed detected by the cadence sensor 16, and estimate the total oxygen intake amount (Z) of the driver from the work amount; estimate the maximum oxygen intake amount (V) of the driver from the physical parameter of the driver; and control the motor 11 such that the exercise intensity calculated from the total oxygen intake amount (Z) and the maximum oxygen intake amount (V) approaches the target exercise intensity of the driver.

According to such a configuration, it is possible to calculate the exercise intensity of the driver by estimating the total oxygen intake amount (Z) of the driver from the torque detected by the torque sensor 15 and the rotational speed detected by the cadence sensor 16 and by estimating the maximum oxygen intake amount (V) from the physical parameter of the driver. Therefore, the motor 11 can be controlled so as to conform to the target exercise intensity required by the driver without the driver having to wear the heart rate detection sensor or the like.

(2) The bicycle 1 further comprises the input device 100 for inputting the physical parameter, wherein the physical parameter is at least one of the gender, the body weight, the age, the exercise experience, and the physical strength of the driver.

According to such a configuration, by inputting the physical parameter from the input device 100, the exercise intensity can be estimated based on the average value of an attribute based on the physical parameter of the driver. Therefore, it is possible to improve the estimation accuracy of the exercise intensity.

(3) The target exercise intensity can be input from the input device 100.

According to such a configuration, since the driver can input the target exercise intensity from the input device 100, it is possible to input not only the exercise intensity within the range of the average driving intensity calculated based on the physical parameter of the driver, but also the exercise intensity outside the range of the average driving intensity when a higher exercise intensity or a lower exercise intensity is required.

(4) The controller 20 is configured to control the driving force or the regenerative force of the motor 11 according to the motive force input from the driver.

According to such a configuration, when a proportion of the torque generated by the motor 11 is to be increased, the controller 20 transmits the electric signal so that the motor 11 outputs a larger torque, and when a proportion of the torque generated by the motor 11 is to be decreased, the controller 20 transmits the electric signal so that the motor 11 outputs a smaller torque. In addition, when it is not sufficient even if the torque generated by the motor 11 is set to 0 to achieve the target exercise intensity, the controller 20 performs regenerative control of the motor 11 so as to generate a resistance force in the direction opposite to the torque input by the driver. Therefore, by controlling the driving force or the regenerative force of the motor 11, it is possible to control the motor 11 such that the exercise intensity approaches the target exercise intensity of the driver in a wide range.

(5) The bicycle 1 further comprises the transmission mechanism 13 configured to shift at least one of the motive force input from the driver and the motive force input from the motor 11 and to output the shifted motive force to the rear wheel 3b.

(6) The controller 20 is configured to control the driving force or the regenerative force of the motor 11 by shifting the transmission mechanism 13 according to the motive force input from the driver.

According to these configurations, since the transmission mechanism 13 is provided, the driving force or the regenerative force of the motor 11 can be increased based on the gear ratio, and so, it is possible to perform the control such that the exercise intensity approaches the target exercise intensity of the driver in a wider range.

(7) The controller 20 is configured to estimate the total oxygen intake amount (Z) from: the oxygen intake amount (X) estimated from the rotational speed detected by the cadence sensor 16; the oxygen intake amount (Y) estimated from the torque detected by the torque sensor 15; and the resting oxygen intake amount (U) of the driver at rest obtained from the physical parameter.

According to such a configuration, by estimating the oxygen intake amount (X) based on the internal work amount estimated from the rotational speed detected by the cadence sensor 16 and the oxygen intake amount (Y) based on the external work amount estimated from the torque detected by the torque sensor 15, estimation accuracy of the total oxygen intake amount (Z) can be improved.

(8) The bicycle 1 is switchable between the standard mode and the fat burning mode, in which the exercise intensity is set higher than the exercise intensity in the standard mode, and the controller 20 is configured to control the motor 11 so that the exercise intensity calculated from the total oxygen intake amount (Z) and the maximum oxygen intake amount (V) approaches the target exercise intensity when in the fat burning mode.

According to such a configuration, when the driver intentionally selects the fat burning mode instead of the standard mode, the control of the motor 11 is executed such that the exercise intensity approaches the target exercise intensity, and so, it is possible to set the exercise intensity according to the intention of the driver.

(9) The input unit is the input device 100 operated by the driver.

According to such a configuration, since the physical parameter and the target exercise intensity can be input from the input device 100, for example, the physical parameter and the target exercise intensity can be input in advance in the input device 100, and the control for setting the exercise intensity can be performed by attaching the input device 100 to the bicycle 1.

(10) The torque sensor 15 is configured to detect the torque input from the crank arms 7b, the crank arms 7b being rotationally driven by the driver via the pedals 7, and the cadence sensor 16 is configured to detect the rotational speed of the crank arms 7b.

According to such a configuration, by being applied to the bicycle 1 in which the driver rotationally drives the crank arms 7b via the pedals 7, the motor 11 can be controlled so as to conform to the target exercise intensity required by the driver by using the bicycle 1.

Here, JP 2019-182227A discloses an electrically assisted bicycle (vehicle) comprising an electric motor, a pedaling force sensor that detects a pedaling force exerted by a driver via pedals, an electric motor that applies an assist force for auxiliary driving a wheel based on the pedaling force, a heart rate acquisition unit that acquires the heart rate of the driver, and a controller that determines the assist force so as to bring the heart rate of the driver closer to a target heart rate.

However, in the electrically assisted bicycle disclosed in JP 2019-182227A, when setting the exercise intensity, the exercise intensity is set by inputting information into an age input region and an exercise intensity input region displayed on a display of the controller. Therefore, the driver simply inputs information into each region, and setting of the exercise intensity was difficult to understand.

(11) (19) (22) (23) (24) In contrast, in the bicycle 1 in which the rear wheel 3b is driven by the motive force input by the driver and the motive force input from the motor 11, the input device 100 for setting the target exercise intensity of the driver includes the exercise intensity setting screen 110 for setting the target exercise intensity, the exercise intensity setting screen 110 being configured to display the exercise intensity setting map 120, in which one of the vertical axis and the horizontal axis indicates one of the physical strength parameters of the driver and the other of the vertical axis and the horizontal axis indicates one of the physical parameters of the driver, wherein the exercise intensity setting map 120 is configured to display: the pointer 121 indicating values of the physical parameter and the physical strength parameter set by default; and the exercise intensity distribution region 122 set by default around the pointer 121, the exercise intensity distribution region 122 being set based on the default information of the physical parameter, and the target exercise intensity in the bicycle 1 can be set based on the position at which the pointer 121 is set within the exercise intensity setting map 120.

According to such a configuration, the exercise intensity setting map 120, in which one of the vertical axis and the horizontal axis indicates one of the physical strength parameters of the driver and the other of the vertical axis and the horizontal axis indicates one of the physical parameters of the driver, is displayed on the exercise intensity setting screen 110 of the input device 100. The driver can set the target exercise intensity in the bicycle 1 simply by setting the position of the pointer 121 indicating the values of the physical parameter and the physical strength parameter with reference to the exercise intensity distribution region 122 that is set based on the default information of the physical parameter displayed on the exercise intensity setting map 120. Therefore, the target exercise intensity can be set by intuitive operation, and the burden on the driver in the setting of the target exercise intensity can be reduced.

(12) the input device 100 further includes the physical parameter input unit 42 for inputting the physical parameter of the driver, wherein the display of the exercise intensity distribution region 122 is changed based on the input physical parameter.

(13) The physical parameter includes the gender, the body weight, the age, and the exercise experience of the driver, and the exercise intensity distribution region 122 is changed so as to become narrower as the number of types of the input physical parameters increases.

According to these configurations, the group is narrowed down to the group including the physical parameter input by the driver and the groups not including the physical parameter of the driver are excluded, and so, it is possible to improve the accuracy of the region indicated by the exercise intensity distribution region 122.

(14) the input device 100 further includes the driving mode setting screen 141 for selecting the standard mode used during the normal driving and the fat burning mode in which the exercise intensity is set higher than the exercise intensity in the standard mode, wherein the exercise intensity setting screen 110 is displayed when the fat burning mode is set.

According to such a configuration, the exercise intensity setting screen 110 is displayed when the driver intentionally selects the fat burning mode instead of the standard mode, and so, the setting of the target exercise intensity according to an intention of the driver is made possible.

(15) The vertical axis of the exercise intensity setting map 120 indicates the physical strength based on the maximum oxygen intake amount (V) of the driver, and the horizontal axis indicates the body weight of the driver.

According to such a configuration, since the vertical axis indicates the physical strength of the driver and the horizontal axis indicates the body weight of the driver, the driver can intuitively set the target exercise intensity by comparison with his or her own body weight and physical strength.

(16) The exercise intensity distribution region 122 is set based on the physical parameter of the group including the age of the driver, and on the exercise intensity setting map 120, the older-age-group exercise intensity distribution region 122a set based on default information of the physical parameter of the group whose age is higher than the age of the driver and the younger-age-group exercise intensity distribution region 122b set based on default information of the physical parameter of the group whose age is lower than the age of the driver are displayed in an overlapping manner with the exercise intensity distribution region 122.

According to such a configuration, because the older-age-group exercise intensity distribution region 122a and the younger-age-group exercise intensity distribution region 122b are displayed, when the driver feels that his or her subjective age is higher than his or her actual age, the driver can set the exercise intensity within the older-age-group exercise intensity distribution region 122a of the group in the next older age bracket, and when the driver feels that his or her subjective age is lower than his or her actual age, the driver can set the target exercise intensity within the younger-age-group exercise intensity distribution region 122b of the group in the next younger age bracket.

(17) The input device 100 includes the communication unit 102 capable of communicating with an external server, wherein positions of the pointer 121 set by the other users can be acquired from the server and displayed in an overlapping manner on the exercise intensity setting map 120.

According to such a configuration, the driver can refer to the target exercise intensities set by members belonging to a specific team, for example, and so, the driver can set the target exercise intensity to be the same as the target exercise intensities set by other members or set the target exercise intensity to be higher than the target exercise intensities set by other members.

(18) The input device 100 is a smartphone wired or wirelessly connected to the bicycle 1.

According to such a configuration, since the physical parameter and the target exercise intensity can be input from the input device 100, for example, the physical parameter and the target exercise intensity can be input in advance in the input device 100, and the control for setting the target exercise intensity can be performed by attaching the input device 100 to the bicycle 1.

Although the embodiment of the present invention has been described above, the above embodiment is merely a part of application examples of the present invention, and is not intended to limit the technical scope of the present invention to the specific configurations of the above embodiment.

For example, in the above-mentioned embodiment, the case in which the vehicle is the bicycle 1 has been described, but the vehicle may be another vehicle that assists the motive force exerted by the driver with the motive force of the motor, such as an electrically assisted kickboard, an electrically assisted wheelchair, and so forth. When the vehicle is an electrically assisted kickboard, the motive force input by the driver by kicking the ground with one foot is assisted by the control of the motor. When the vehicle is an electrically assisted wheelchair, the motive force input by the driver by turning the wheel with an arm is assisted by the control of the motor.

In addition, in the above-mentioned embodiment, the electric assist unit 10 is attached to the rear wheel 3b. Instead of this configuration, the electric assist unit 10 may be attached to the front wheel 3a to utilize the front wheel 3a as the drive wheel.

In addition, the input device 100 may be a smartphone or the like that is connected to the controller 20 by wired communication or wireless communication to transmit and receive data and that is connectable to the Internet.

In addition, the controller 20 or the input device 100 may be connected to a cloud server (not shown) on the Internet, and the cloud server may be utilized as an execution subject of some of the above-mentioned respective types of processing whose execution subject is the controller 20 and the input device 100.

In other words, in the above-mentioned embodiment, the case in which the execution subject of the control for setting the exercise intensity in the bicycle 1 is the controller 20 (or the controller 20 and the input device 100) mounted on the bicycle 1 has been described as an example, but the execution subject of the control may be any one of the controller 20, the input device 100, and the cloud server, or a combination of a plurality thereof. Therefore, any one of the controller 20, the input device 100, and the cloud server, or a combination of a plurality thereof corresponds to the controller.

In addition, a series of processing in the bicycle 1 described above may be provided as a program for causing a computer to execute the processing. A program for executing the above-mentioned series of processing is provided by a storage medium readable by a computer. In addition, various programs executed by a computer may be, for example, those stored in a non-transitory recording medium such as a CD-ROM.

DESCRIPTION OF REFERENCE SIGNS

1 electrically assisted bicycle (vehicle)
3b rear wheel (drive wheel)
7 pedal
7b crank arm (crank)
10 electric assist unit
11 motor
13 transmission mechanism
14 vehicle speed sensor
15 torque sensor
16 cadence sensor (input speed sensor)
20 controller
42 physical parameter input unit
100 input device (input unit, mobile terminal)
102 communication unit
110 exercise intensity setting screen
120 exercise intensity setting map
121 pointer
122 exercise intensity distribution region
122a older-age-group exercise intensity distribution region
122b younger-age-group exercise intensity distribution region
141 driving mode setting screen

**Claims**

1. A vehicle in which a drive wheel is driven by a motive force input by a driver and a motive force input from a motor, the vehicle comprising:

   a torque sensor configured to detect a torque of the motive force input by the driver;
   an input speed sensor configured to detect an input speed of the motive force input by the driver; and
   a controller configured to control the motor, wherein
   the controller is configured to:

      calculate a work amount of the driver based on the torque detected by the torque sensor and the input speed detected by the input speed sensor, and estimate an oxygen intake amount of the driver from the work amount;
      estimate a maximum oxygen intake amount of the driver from a physical parameter of the driver; and
      control the motor such that an exercise intensity calculated from the oxygen intake amount and the maximum oxygen intake amount approaches a target exercise intensity of the driver.

2. The vehicle according to claim 1, further comprising

   an input unit for inputting the physical parameter, wherein
   the physical parameter is at least one of a gender, a body weight, an age, an exercise experience, and a physical strength of the driver.

3. The vehicle according to claim 2, wherein the target exercise intensity can be input from the input unit.

4. The vehicle according to claim 1, wherein

the controller is configured to control a driving force or a regenerative force of the motor according to the motive force input from the driver.

**5.** The vehicle according to claim 1, further comprising a transmission mechanism configured to shift at least one of the motive force input from the driver and the motive force input from the motor and to output the shifted motive force to the drive wheel.

**6.** The vehicle according to claim 5, wherein
the controller is configured to control a driving force or a regenerative force of the motor by shifting the transmission mechanism according to the motive force input from the driver.

**7.** The vehicle according to claim 1, wherein
the controller is configured to estimate the oxygen intake amount from: a first oxygen intake amount estimated from the input speed detected by the input speed sensor; a second oxygen intake amount estimated from the torque detected by the torque sensor; and a resting oxygen intake amount of the driver at rest obtained from the physical parameter.

**8.** The vehicle according to claim 1, wherein

the vehicle is switchable between a standard mode and a fat burning mode, in which the exercise intensity is set higher than the exercise intensity in the standard mode, and
the controller is configured to control the motor so that the exercise intensity calculated from the oxygen intake amount and the maximum oxygen intake amount approaches the target exercise intensity when in the fat burning mode.

**9.** The vehicle according to claim 2, wherein
the input unit is a mobile terminal operated by the driver.

**10.** The vehicle according to any one of claims 1 to 9, wherein

the torque sensor is configured to detect a torque input from a crank, the crank being rotationally driven by the driver via a pedal, and
the input speed sensor is configured to detect a rotational speed of the crank.

**11.** An input device for setting the target exercise intensity of the driver in the vehicle according to claim 1, the input device comprising

an exercise intensity setting screen for setting the target exercise intensity, the exercise intensity setting screen being configured to display an exercise intensity setting map, in which one of a vertical axis and a horizontal axis indicates one of physical strength parameters of the driver and other of the vertical axis and the horizontal axis indicates one of the physical parameters of the driver, wherein
the exercise intensity setting map is configured to display:

a pointer indicating values of the physical parameter and the physical strength parameter set by default; and
an exercise intensity distribution region set by default around the pointer, the exercise intensity distribution region being set based on default information of the physical parameter, and

the target exercise intensity in the vehicle can be set based on a position at which the pointer is set within the exercise intensity setting map.

**12.** The input device according to claim 11, further comprising
a physical parameter input unit for inputting the physical parameter of the driver, wherein display of the exercise intensity distribution region is changed based on the input physical parameter.

**13.** The input device according to claim 12, wherein

the physical parameter includes a gender, a body weight, an age, and an exercise experience of the driver, and
the exercise intensity distribution region is changed so as to become narrower as a number of types of the input physical parameters increases.

**14.** The input device according to claim 11, further comprising

a driving mode setting screen for selecting a standard mode used during normal driving and a fat burning mode in which the target exercise intensity is set higher than the target exercise intensity in the standard mode, wherein the exercise intensity setting screen is displayed when the fat burning mode is set.

**15.** The input device according to claim 11, wherein
the vertical axis of the exercise intensity setting map indicates physical strength based on the maximum oxygen intake amount of the driver, and the horizontal axis indicates body weight of the driver.

**16.** The input device according to claim 15, wherein

the exercise intensity distribution region is set based on the physical parameter of a group including an age of the driver, and
on the exercise intensity setting map,
an older-age-group exercise intensity distribution region set based on default information of the physical parameter of a group whose age is higher than the age of the driver; and
a younger-age-group exercise intensity distribution region set based on default information of the physical parameter of a group whose age is lower than the age of the driver
are displayed in an overlapping manner with the exercise intensity distribution region.

**17.** The input device according to claim 11, further comprising

a communication unit capable of communicating with an external server, wherein
positions of the pointer set by other users can be acquired from the server and displayed in an overlapping manner on the exercise intensity setting map.

**18.** The input device according to any one of claims 11 to 17, wherein
the input device is a smartphone wired or wirelessly connected to the vehicle.

**19.** A vehicle comprising the input device according to claim 11, wherein
the controller is configured to control the motor based on the set target exercise intensity.

**20.** A vehicle control method for controlling a vehicle in which a drive wheel is driven by a motive force input by a driver and a motive force input from a motor,

the vehicle comprising:

a torque sensor configured to detect a torque of the motive force input by the driver; and
an input speed sensor configured to detect an input speed of the motive force input by the driver; wherein

the vehicle control method comprising:

a step of calculating a work amount of the driver based on the torque detected by the torque sensor and the input speed detected by the input speed sensor, and estimating an oxygen intake amount of the driver from the work amount;
a step of estimating a maximum oxygen intake amount of the driver from a physical parameter of the driver; and
a step of controlling the motor such that an exercise intensity calculated from the oxygen intake amount and the maximum oxygen intake amount approaches a target exercise intensity of the driver.

**21.** A program executable by a computer of a vehicle in which a drive wheel is driven by a motive force input by a driver and a motive force input from a motor,

the vehicle comprising:

a torque sensor configured to detect a torque of the motive force input by the driver; and
an input speed sensor configured to detect an input speed of the motive force input by the driver; wherein

the program causes the computer to execute a procedure of:

calculating a work amount of the driver based on the torque detected by the torque sensor and the input speed detected by the input speed sensor, and estimating an oxygen intake amount of the driver from the work amount;
estimating a maximum oxygen intake amount of the driver from a physical parameter of the driver; and
controlling the motor such that an exercise intensity calculated from the oxygen intake amount and the maximum oxygen intake amount approaches a target exercise intensity of the driver.

**22.** An input device for setting a target exercise intensity of a driver in a vehicle, in which a drive wheel is driven by a motive force input by the driver and a motive force input from a motor, the input device comprising

an exercise intensity setting screen for setting the target exercise intensity, the exercise intensity setting screen being configured to display an exercise intensity setting map, in which one of a vertical axis and a horizontal axis indicates one of physical strength parameters of the driver and other of the vertical axis and the horizontal axis indicates one of physical parameters of the driver, wherein
the exercise intensity setting map is configured to display:

a pointer indicating values of the physical parameter and the physical strength parameter set by default; and
an exercise intensity distribution region set by default around the pointer, the exercise intensity distribution region being set based on default information of the physical parameter, and

the target exercise intensity in the vehicle can be set based on a position at which the pointer is set within the exercise intensity setting map.

**23.** An input device control method for controlling an input device for setting a target exercise intensity of a driver in a vehicle, in which a drive wheel is driven by a motive force input by the driver and a motive force input from a motor, wherein

the input device comprising
an exercise intensity setting screen for setting the target exercise intensity, the exercise intensity setting screen being configured to display an exercise intensity setting map, in which one of a vertical axis and a horizontal axis indicates one of physical strength parameters of the driver and other of the vertical axis and the horizontal axis indicates one of physical parameters of the driver,
the input device control method comprising:

a step of displaying, on the exercise intensity setting map,

a pointer indicating values of the physical parameter and the physical strength parameter set by default; and
an exercise intensity distribution region set by default around the pointer, the exercise intensity distribution region being set based on default information of the physical parameter, and

a step of setting the target exercise intensity in the vehicle based on a position at which the pointer is set within the exercise intensity setting map.

**24.** A program executable by a computer of an input device for setting a target exercise intensity of a driver in a vehicle, in which a drive wheel is driven by a motive force input by the driver and a motive force input from a motor, wherein

the input device has
an exercise intensity setting screen for setting the target exercise intensity, the exercise intensity setting screen being configured to display an exercise intensity setting map, in which one of a vertical axis and a horizontal axis indicates one of physical strength parameters of the driver and other of the vertical axis and the horizontal axis indicates one of physical parameters of the driver,
the program causes the computer to execute a procedure of
displaying, on the exercise intensity setting map,

a pointer indicating values of the physical parameter and the physical strength parameter set by default; and
an exercise intensity distribution region set by default around the pointer, the exercise intensity distribution region being set based on default information of the physical parameter, and

setting the target exercise intensity in the vehicle based on a position at which the pointer is set within the exercise intensity setting map.

5
4
100
1
2
2a
10
30
20
8
7
7b
6a
7c
7b
7
6b
6c
3b
3a

*FIG. 1*

1
100
20
14
41
DRIVING MODE INPUT UNIT
42
PHYSICAL PARAMETER INPUT UNIT
43
TARGET EXERCISE INTENSITY INPUT UNIT
CONTROLLER
VEHICLE SPEED SENSOR
15
TORQUE SENSOR
16
CADENCE SENSOR
POWER STORAGE UNIT
30
MOTOR
TRANSMISSION MECHANISM
11
13
10
DRIVE WHEEL
3b

*FIG. 2*

START
S101
DETERMINE DRIVING MODE
FAT BURNING MODE
STANDARD MODE
S102
CALCULATE VEHICLE SPEED
S103
CALCULATE INPUT TORQUE
S104
CALCULATE ASSIST RATIO
S105
DETERMINE MOTOR DRIVING FORCE/ REGENERATIVE FORCE
S106
CONTROL MOTOR
END
S107
CALCULATE VEHICLE SPEED
S108
CALCULATE INPUT TORQUE
S109
CALCULATE ASSIST RATIO
S110
CALCULATE ASSIST RATIO CORRECTION
S111
DETERMINE MOTOR DRIVING FORCE/ REGENERATIVE FORCE

*FIG. 3*

CALCULATE ASSIST RATIO CORRECTION
S201
CALCULATE CADENCE
S202
CALCULATE OXYGEN INTAKE AMOUNT
S203
CALCULATE PEDAL INPUT TORQUE
S204
CALCULATE OXYGEN INTAKE AMOUNT
S205
PHYSICAL PARAMETER
S206
INPUT PRESENT?
No
Yes
S208
STANDARD VALUE
S207
INPUT VALUE
S209
CALCULATE RESTING OXYGEN INTAKE AMOUNT
S211
CALCULATE TOTAL OXYGEN INTAKE AMOUNT
S210
CALCULATE MAXIMUM OXYGEN INTAKE AMOUNT
S212
CALCULATE EXERCISE INTENSITY
S213
WAVEFORM PROCESSING
S214
TARGET EXERCISE INTENSITY
S215
CALCULATE ASSIST RATIO CORRECTION VALUE
RETURN

*FIG. 4*

OXYGEN INTAKE AMOUNT (X)
[ml/min]
ROTATIONAL SPEED OF CRANK (S)
[rpm]

*FIG. 5*

OXYGEN INTAKE AMOUNT (Y)
[ml/min]
INPUT TORQUE (T) [N·m]

*FIG. 6*

1
101
100
20
14
VEHICLE SPEED SENSOR
141
DRIVING MODE SETTING SCREEN
15
42
PHYSICAL PARAMETER INPUT UNIT
TORQUE SENSOR
16
110
EXERCISE INTENSITY SETTING SCREEN
CONTROLLER
CADENCE SENSOR
102
COMMUNICAT ION UNIT
17
HEART RATE SENSOR
POWER STORAGE UNIT
MOTOR
TRANSMISSION MECHANISM
30
11
13
10
DRIVE WHEEL
3b

*FIG. 7*

100
101
103
104
YOU'RE
BURNING
FAT
EXERCISE
INTENSITY
55%

*FIG. 8*

110
42a
(42)
120
42b
(42)
AGE: EMPTY
GENDER: EMPTY
athlete
PHYSICAL STRENGTH
entry
122
121
20
BODY WEIGHT [kg]
100

*FIG. 9*

110
42a
(42)
120
42b
(42)
AGE: 35
GENDER: EMPTY
athlete
PHYSICAL STRENGTH
entry
122
121
20
BODY WEIGHT [kg]
100


*FIG. 10*

110
42a
(42)
120
42b
(42)
AGE: 35
GENDER: MALE
athlete
PHYSICAL STRENGTH
entry
122
121
20
BODY WEIGHT [kg]
100

*FIG. 11*

110
42a
(42)
120
42b
(42)
AGE: 35
GENDER: MALE
athlete
121
PHYSICAL STRENGTH
122
entry
20
BODY WEIGHT [kg]
100

*FIG. 12*

110
42a
(42)
120
42b
(42)
AGE: 35
GENDER: MALE
athlete
-10 YEARS
122b
PHYSICAL STRENGTH
122
121
122a
entry
+10 YEARS
20
BODY WEIGHT [kg]
100

*FIG. 13*

110
42a
(42)
120
42b
(42)
AGE: 35
GENDER: MALE
athlete
PHYSICAL
STRENGTH
entry
122
121
20
BODY WEIGHT [kg]
100

*FIG. 14*

100
101
MAXIMUM OXYGEN
INTAKE AMOUNT
MALE
FEMALE
AGE
AGE/BODY WEIGHT
BODY WEIGHT
MALE
FEMALE
AGE
DATE OF BIRTH
1992. 1. 26
1993. 2. 27
1994. 3. 28
BODY
WEIGHT
50.0
kg
42a
(42)

*FIG. 15*

110
42a
(42)
120
42b
(42)
AGE: EMPTY
GENDER: EMPTY
athlete
PHYSICAL STRENGTH
entry
122
121
20
AGE
60

*FIG. 16*

## INTERNATIONAL SEARCH REPORT

International application No. **PCT/JP2024/028255**

**A. CLASSIFICATION OF SUBJECT MATTER**

***B62M 6/45***(2010.01)i; ***B62J 45/00***(2020.01)i; ***B62J 45/411***(2020.01)i; ***B62J 45/412***(2020.01)i; ***B62M 25/08***(2006.01)i
FI: B62M6/45; B62J45/412; B62J45/411; B62M25/08; B62J45/00

According to International Patent Classification (IPC) or to both national classification and IPC

**B. FIELDS SEARCHED**

Minimum documentation searched (classification system followed by classification symbols)

B62M6/45; B62J45/00; B62J45/411; B62J45/412; B62M25/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-234479 A (NATIONAL JITENSHA KOGYO KK) 20 August 2002 (2002-08-20) paragraphs [0019]-[0041], fig. 1-9 | 1-21 |
| A | WO 2023/120027 A1 (PANASONIC INTELLECTUAL PROPERTY MANAGEMENT CO., LTD.) 29 June 2023 (2023-06-29) paragraphs [0011]-[0101], fig. 1-11 | 1-21 |
| P, X | JP 2024-4908 A (PANASONIC INTELLECTUAL PROPERTY MANAGEMENT CO., LTD.) 17 January 2024 (2024-01-17) paragraphs [0012]-[0163], fig. 1-11 | 1-6, 9-10, 20-21 |
| P, A | | 7-8, 11-19 |
| P, X | JP 2024-4601 A (PANASONIC INTELLECTUAL PROPERTY MANAGEMENT CO., LTD.) 17 January 2024 (2024-01-17) paragraphs [0013]-[0191], fig. 1-18 | 1-2, 4-6, 9-10, 20-21 |
| P, A | | 3, 7-8, 11-19 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No. **PCT/JP2024/028255**

**Box No. III Observations where unity of invention is lacking (Continuation of item 3 of first sheet)**

This International Searching Authority found multiple inventions in this international application, as follows:

Document 1: JP 2002-234479 A (NATIONAL JITENSHA KOGYO KK) 20 August 2002 (2002-08-20) paragraphs [0019]－[0041], fig. 1-9 (Family: none)

(Invention 1) Claims 1-21

Claims 1-21 have the special technical feature of a "vehicle in which drive wheels are driven by power input by a driver and power input from a motor, the vehicle comprising: a torque sensor which detects torque of power input by a driver; an input speed sensor which detects an input speed of power input by a driver, and a controller which controls the motor, wherein the controller calculates workload of a driver on the basis of torque detected by the torque sensor and an input speed detected by the input speed sensor, estimates an oxygen uptake of the driver from the workload, estimates the maximum oxygen uptake of the driver from physical parameters of the driver, and controls the motor such that an exercise intensity calculated from the oxygen uptake and the maximum oxygen uptake gets closer to a target exercise intensity for the driver," and are thus classified as invention 1.

(Invention 2) Claims 22-24

Claims 22-24 share, with claim 1 classified as invention 1, the common technical feature in which "in a vehicle in which drive wheels are driven by power input by a driver and power input from a motor, a target exercise intensity for the driver is set." However, the technical feature does not make a contribution over the prior art in light of the disclosures of document 1, and thus cannot be said to be a special technical feature. Also, there are no other same or corresponding special technical features between these inventions.

Additionally, claims 22-24 do not depend from claim 1. Furthermore, claims 22-24 are not substantially identical to or similarly closely related to any of the claims classified as invention 1.

Therefore, claims 22-24 cannot be classified as invention 1.

Moreover, claims 22-24 have the special technical feature of an "input device configured to set a target exercise intensity for a driver in a vehicle in which drive wheels are driven by a power input by a driver and a power input from a motor, the input device comprising an exercise intensity setting screen configured to display an exercise intensity setting map in which one of a vertical axis or a horizontal axis serves as a physical strength parameter of a driver and the other one serves as physical parameters of a driver, and to set the target exercise intensity, wherein the exercise intensity setting map displays a pointer indicating values of the physical parameters and the physical strength parameter which are set by default, and an exercise intensity distribution region which is set by default around the pointer and set on the basis of default information about the physical parameters, and the target exercise intensity in the vehicle can be set on the basis of the position at which the pointer is set within the exercise intensity setting map," and are thus classified as invention 2.

Form PCT/ISA/210 (continuation of first sheet) (July 2022)

**INTERNATIONAL SEARCH REPORT**

International application No.
**PCT/JP2024/028255**

**Box No. III Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-21**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
**Information on patent family members**

International application No.
**PCT/JP2024/028255**

| Patent document cited in search report | Publication date (day/month/year) | Patent family member(s) | Publication date (day/month/year) |
|---|---|---|---|
| JP 2002-234479 A | 20 August 2002 | (Family: none) | |
| WO 2023/120027 A1 | 29 June 2023 | (Family: none) | |
| JP 2024-4908 A | 17 January 2024 | (Family: none) | |
| JP 2024-4601 A | 17 January 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003231491 A
- JP 2019182227 A